# EUROPEAN PATENT SPECIFICATION

(11) **EP 1 646 097 B1**
(45) Date of publication and mention of the grant of the patent: **04.08.2010**
(21) Application number: 05020419.7
(22) Date of filing: 20.09.2005
(51) Int. Cl.: H01M 8/02, H01M 8/10, B01D 71/06, C08J 5/22

(54) **Ion exchange composite material based on proton conductive functionalized inorganic support compounds in a polymer matrix**
Ionenaustauschverbundmaterial auf Basis von protonenleitenden funktionalisierten anorganischen Trägerverbindungen in einer Polymermatrix
Materiau composite échangeur d'ions à base de composants supports, inorganique, fonctionnalisés, conducteurs de protons dans une matrice polymère

(30) Priority: 24.09.2004 US 949022
(43) Date of publication of application: 12.04.2006
(73) Proprietor: Sim Composites Inc., Quebec, QC G1M 4G1 (CA)
(72) Inventor: St-Arnaud, Marc, Québec, Québec G1S 3X4 (CA); Bebin, Philippe, 37000 Tours (FR)
(74) Representative: von Kreisler Selting Werner

(56) References cited:
- WO-A-03/083985
- JP-A- 2001 155 744
- US-B1- 6 277 304

## Description

### CROSS REFERENCE

This application is a continuation-in-part of International Application No. PCT/CA03/00435, filed March 26, 2003 and published as WO 03/083985 A2 on October 9, 2003, which claims priority to U.S. Provisional Application 60/367,771 filed March 28, 2002.

### TECHNICAL FIELD

The present invention relates to a composite material based on proton conductive functionalized inorganic support compounds such as silica particles dispersed in a functionalized or non-functionalized polymer matrix. The present invention also relates to a method for producing the above composite material, and forming membranes therewith, that can, for example, be used for electrochemical devices, particularly for proton exchange membranes in fuel cells, as drying/humidifying membranes, for gas or solvent conditioning, as acid catalyst membranes, separation of metals, or desalination of water.

### BACKGROUND ART

Ion exchange materials have numerous uses in several technological fields such as in electrochemical devices, for environmental needs, and in chemical reactions. Among ion exchange materials, proton conductive materials are under considerable studies because of the growing interest in clean power generation for which polymer electrolyte membrane fuel cells (PEMFC) are one of its important representatives.

The proton conductivity of a material can be obtained, for example, by incorporating proton exchange groups in the chemical structure of the material. The sulfonic acid function is one of the most efficient proton exchange groups, however, carboxylic or phosphonic acid groups or the like can also be used, as well as other groups set forth herein below, for proton mobility.

Many developments on perfluorinated or partially fluorinated polymers or copolymers bearing sulfonic acid groups have taken place. This family of materials can be found in the market under the commercial names of, for example, Nafion® (DuPont de Nemours and Co.) [US 3,282,875; US 4,330,654], Aciplex® (Asahi Chemical Industry), Flemion™ (Asahi Glass KK) or Gore-Select® (W.L. Gore) [US 5,635,041; US 5,547,551; US 5,599,614]. A phase separation between the hydrophilic acid regions and the hydrophobic fluorocarbon regions occurs and seems to contribute to the good proton conductivity in the material [T.D. Gierke, G.E. Munn, F.C. Wilson, J. Polym. Sci. Polym. Phys. ED. 1981, 19, 1967; M. Fujimura, T. Hashimoto, H. Kawai, Macromolecules, 1981, 14, 1309]. Unfortunately, at high temperatures (close to 100°C), water management becomes problematic, mainly because of the hydrophobicity of the fluorinated backbone of the material that causes a rapid dehydration of the membrane.

By comparison, non fluorinated but sulfonated polymers can also present good proton conductivity with less critical dehydration effects. A strong chemical structure, preferably an aromatic based structure, is essential to give the material a good stability at high temperatures. Interesting properties for fuel cell applications have already been demonstrated for polymers based on, for example, poly(aromatic ether ketones) ([US 6,355,149]), poly(aromatic ether sulfone) or polyphenylene (US 5,403,675]).

To reduce dimensional variations between the wet and dry states of the material and to enhance its water retention, some inorganic fillers can be added to the sulfonated polymer. In that case, proton conductivity is ensured by the organic phase while the inorganic phase helps retaining water and reduces material expansion ["Proceedings of 1998 Fuel Cell Seminar", November 16-19, Palm Springs, California].

The combination of the advantageous properties of the inorganic and organic phases is encountered in numerous developments of composite material dealing with the formation of a stable continuous proton conductive phase. In these developments, alkoxysilane derivatives are polymerized via sol-gel or co-condensation processes to lead mainly to three-dimensionally crosslinked silicon-oxygen based structures [EP 1223632A2], [EP 0560899B1], [US 6,277,304]. Such kind of composite materials are promising but the control of their preparations is not easy and is often difficult to achieve. Moreover, such type of structure does not easily offer some ion exchange capacity. Simpler composite preparations can present interesting solutions for the challenges of electrochemical devices, such as fuel cell membranes.

Japanese Patent Application PH 11-336986 published on June 8, 2001 under Publication Number P2001-1 55744 and filed in the name of Toyota Central R&D Labs Inc. describes a proton conductor based on a high molecular weight electrolyte comprising functionalized silica. Silica functionalized with sulfonic acid, carboxylic acid and phosphonic acid groups are mentioned. With respect to the electrolyte, the description is restricted to perfluoro sulfonic acid type polymers, styrene divinyl benzene sulfonic acid type polymers and styrene - ethylene - butadiene - styrene copolymers. In a specific example using sulfonated silica and a perfluoro sulfonic acid polymer the membrane obtained has a current density of 0.5 volt and 1 A/cm², which is not satisfactory. No data is available on the current density of the membrane obtained in the only other example. It has to be presumed that it is substantially the same or inferior to that of the membrane of Example 1. There is, therefore, a need to provide an improved membrane in which the current density will give satisfaction.

Canadian Application No. 2,291,703 published on June 8, 2000 and was filed in the name of Université Laval, discloses an electrolytic membrane made of a polymer matrix and a filler material that contributes to the enhancement of the proton conductivity of the membrane. In all the examples, the polymer matrix is based on an aromatic polyether ketone (PEEK) or a sulfonated derivative thereof (SPEEK) while the filler is BPO₄ or a heteropolyacid. This composite will not be time resistant because of the progressive solubilization of the filler into the polymer matrix.

There, therefore, exists a need for a composite material based on an inorganic phase dispersed in a polymer matrix that has a good proton exchange capacity, that can give membranes with excellent current density, that is time resistant, and that can be easily prepared.

### SUMMARY OF THE INVENTION

It is an object of the present invention to provide an ion exchange composite material that has good water retention, good impermeability to gasses and liquids, good desalination of water, good separation of metals, and good mechanical properties.

It is another object of the invention or provides a method for producing an ion exchange composite material in a membrane form that can be easily prepared.

It is an object of the invention to provide a solid ion exchange composite membrane that has a good relevant proton exchange capacity and good current density, and hence can be used in fuel cells.

The above and other objects of the present invention can be achieved by providing a composite material according to claim 1.

### BRIEF DESCRIPTION OF DRAWING

The invention is illustrated by means of the annexed drawing in which:
FIG. 1 is a polarization curve of current density versus voltage of a membrane according to the invention,
FIG. 2 is a polarization curve of current density versus voltage of a membrane according to the invention,
FIG. 3 is a sorption isotherm of polysulfonic silica- poly(aromatic ether ketone) cation exchange membrane for sodium, and
FIG. 4 is a polymerization curve for polysulfonic silica-poly(aromatic ether ketone) cation exchange membrane for a fuel cell.

### DISCLOSURE OF INVENTION

The composite material according to the invention relates to a physical blend, or mixture according to claim 1. The inorganic support compounds are preferably functionalized with various chemical compounds, either covalently or by ionic bonds.

According to a preferred embodiment, the composite material of the invention normally comprises at least about 10 weight percent to about 90 weight percent, desirably from about 12 weight percent to about 50 weight percent, and preferably from about 15 to about 30 weight percent of the functionalized inorganic support compounds based upon the total weight of the one or more functionalized inorganic support compounds and the one or more functionalized or non-functionalized polymers.

In the composite material according to the invention, the inorganic support compounds are preferably characterized by:
(i) a surface area of 10m² per gram to 1500m² per gram,
(ii) a particle dimension from 0.01 µm to 500 µm,
(iii) a pore diameter from 0, or about 1, or about 5, or about 10, or about 50, or about 100 angstroms to 500 angstroms.
The inorganic support compounds can be either porous or solid depending upon the end use. For membranes as for fuel cells, the inorganic support compounds are preferably solid.

Ion exchange groups are usually present in the inorganic support compounds in amounts between 0.1 and 5.0 mmol/g.

According to the concepts of the present invention, a large number of different types of inorganic support compounds or particles thereof can be utilized. Such inorganic support compounds generally include metal oxides of groups 4, 13 and 14 of the Period Table, such as zirconium oxide, titanium oxide, aluminum oxide such as alumina (Al₂O₃), and silica, or combinations thereof. The inorganic support compounds can be crystalline or non-crystalline and desirably are functionalized or chemically grafted with chemical functions such that the inorganic support compounds do not dissolve in the final product.

Various types of silica are highly preferred for use in the formation of the inorganic phase in the composite material. The silica can be porous silica or a solid, non-porous silica. Such silicas include but not limited to: amorphous silica, fumed silica, precipitated silica, spherical silica, mesoporous silica, irregular silica, structured silica, molecular sieve silica, silesquioxane derivatives, and mixtures thereof. The amount of silica particles and their average size play important roles in the formation of a continuous hydrophilic phase and in the mechanical properties of the material.

Functionalizing groups can provide unique catalytic sites within the pores of the inorganic sold support porous particles. Functionalizing groups can also serve to modify the activity of sites already present in the porous support material, serve as precursors to ceramic materials, serve as a scavenger, initiate other chemical reactions (catalytic functions), serve as a crosslinking agent, serve as an ion exchange enhancement, and the like.

According to the present invention, functionalizing group will be understood to be a characteristic reactive, covalently or ionically bonded group of a chemical compound, and functionalization will be understood to be the incorporation of covalently or ionically bonded functional groups into the inorganic support compound.

The addition of the one or more functional groups to the inorganic support compounds of the present invention is well known to the art and to the literature and many such compounds are commercially available.

As noted above, the functionalizing agent of the inorganic support compound is one or more of a salt, a halogen containing compound, a hydrocarbon, an oxygen containing compound, a sulfur containing compound, a nitrogen containing compound, or a phosphorous containing compound, or combinations thereof, wherein:
the one or more salts are halides, permanganates, nitrates, sulfates, phosphates, salts of various metals, or combinations thereof;
the one or more halogen containing compounds are halides, or halogenized hydrocarbons, each containing from 1 to about 20 carbon atoms, or combinations thereof;
the one or more hydrocarbons are linear, cyclic, aromatic or polycyclic hydrocarbons, each containing from 1 to about 20 carbon atoms, or combinations thereof;
the one or more oxygen containing compounds are alcohols, alkoxides, polyatomic alcohols, aldehydes, ketones, ethers, polyatomic ethers, carboxylic acids, or polyatomic carboxylic acids and their anhydrides, esters, or carboxylates, each containing from 1 to about 20 carbon atoms, or combinations thereof;
the one or more sulfur containing compounds are thiols, sulfones, sulfonic acid, or sulfonates, each containing from 1 to about 20 carbon atoms, or combinations thereof;
the one or more of a nitrogen containing compound are primary amines, secondary amines, tertiary amines, quaternary ammonium bases and their salts, polyatomic amines, amides, cyamides, isocyanates, isothiocyanates, imides, or pyridines, each containing from 1 to about 20 carbon atoms, or combinations thereof; and
the one or more phosphorous containing compounds are phosphines, phosphates, phosphineoxides, phosphoric acids, phosphonic acids or, phosphonates, each containing from 1 to about 20 carbon atoms, or combinations thereof.

The functionalizing agent may be incorporated into a treated inorganic support compound in an amount from about 0.01 % to about 60% by weight, and preferably from about 1.0% to about 30.0% by weight based upon the total weight of the treated inorganic support compound.

A treating or complexing agent which are known to the art and to the literature is utilized to bond the functional group to the inorganic support compound such as silica. The various functional or ion exchange groups are preferably covalently bonded or ionically bonded to the inorganic support particles such as silica, and/or to the polymer, for example through linear or ramified alkyl chains, linear or ramified aromatic chains, or a combination of alkyl and aromatic chains that are linear or ramified with a linear or ramified alkyl or aromatic chains, the chains optionally comprising heteroatoms and/or halogen atoms.

The treated inorganic support compound can be used as is or can be further subjected to a thermal treatment or treatment with a reactive gas such as oxygen or carbon monoxide for activation thereof.

The method of the present invention also includes removal of the templating surfactant found in as-synthesized ultra large porous material of the invention. Most importantly, the functionalizing of the ultra large porous material and the removal of the templating surfactant occur concurrently in a one-step method thereby providing a cost effective and efficient manner of recovering and recycling the more expensive component of the functionalized catalyst or sorbent formed by the method of the present invention.

The inorganic support compounds such as silica particles which are functionalized with acid moieties, or the other functional groups set forth above, and when dispersed inside the polymer matrix, constitute an inorganic hydrophilic phase with a proton exchange capacity. The organic phase comprising the polymer matrix can contain ion exchange groups that are initially present in the chemical structure of the polymer, or ion exchange groups bonded to the chemical structure of the polymer to enhance the proton conductivity of the composite material. Thus, the proton exchange capacity is achieved by both the functionalized polymer matrix and the dispersed inorganic support compounds.

According to the concepts of the present invention, a large number of functionalized or non-functionalized polymers and/or copolymers are utilized in conjunction, that is as a physical blend or mixture, with the above-described inorganic solid support compounds or particles to form the ion exchange composites of the present invention. When utilized herein, the term polymer can refer to polymers or copolymers, unless specifically stated. The polymers can optionally contain short fibers therein, including fibers of polyester, nylon, polyolefin, and the like as well as carbon fibers, boron fibers, and the like. When utilized, the fibers are incorporated into a melt polymer and then molded or otherwise shaped into a desired product form. The amount of fibers is generally from about 1 to about 80 and desirably from 1 to about 20 percent by weight based upon the total weight of the one or more polymers.

Suitable polymers are set forth in the following table:

| **POLYMERS** | **COMMON EXAMPLES** | **COMMERCIALLY AVAILABLE AS (BRAND NAME)** |
|---|---|---|
| ABS | Acrylonitrile-Butadiene-Styrene Copolymer | |
| Acetal | POM | Celcon®,Delrin®, Delrin® |
| Acrylic | Poly(methyl methacrylate) | Acrylite®, Lucite®, Optix®, Plexiglas® |
| Acrylic/PVC | DKE | Kydex® |
| Polybutyrate | | |
| Polyethylene-Vinyl Acetate | EVA, Acetate | |
| Fiber Reinforced Plastics | Fiberglass, Composites | |
| Non-Sulfonic acid functionalized Fluoropolymers | ECTFE (ethylenechlorotetrafluoroethylene), ETFE (ethylenetetrafluoroethylene), FEP (fluoroethylenepropylene), PCTFE (polychlorotetrafluoroethylene), PTFE (polytetrafluoroethylene), PVDF (polyvinylidene fluoride) | |
| Kevlar/Nylon 66 | | Hydlar®Z |
| Nylon | Polyamide, Cast Nylon | Ensilon®, Nyloil® |
| Phenolic Laminates | | Micarta™ |
| Polyamide-imide | PAI | Torlon® |
| Poly(benzoyl phenylene) | | |
| Polycarbonate | | Hyzod®, Hygard®, Lexan® |
| Polyester | PBT,PET,PETG | Vivak®, Hydex® 4101 |
| Polyetherketone | PEEK | Victrex®, Kadel®, and more |
| Polyetherimide | PEI | Ultem® |
| Polyethersulfone | PES | |
| Polyethylene | LDPE, HDPE, UHMW | Tivar®, HiTec® |
| Polyimide | PI | Kapton®, Vespel® |
| Polyphenylene Oxide | PPO | Noryl® |
| Polyphenylene Sulfide | PPS | Ryton®, Fortron®, Thermocomp®, Supec® and more |
| Polypropylene | | Protec® |
| Polystyrene | HIPS, BIAX, Cross-linked, REXOLITE | |
| Polysulfone | | Ensifone® |
| Polyurethane | Urethane | Hydex® 202 |
| Polyvinyl Chloride | PVC, CPVC | |
| Polyvinyl Chloride Foam | PVC Foam | Celtec®, Sintra® |
| Polybenzimidazole | PBI | Celazole® |
| Polytetrafluoroethylene | PTFE | Teflon®, Hostaflon® |
| Polyphthalamide | PPA | Amodel®, BGU®, and more |
| Organic Polyacid | | |
| Aromatic Polyamides | | Reny®, Zytel HTN®, Stanyl® |
| Liquid Crystal Polymer | LCP | Xydar®, Vectra®, Zenite®, and more; and combinations thereof |

The above polymers are generally well known to the art and to the literature and encompass the various different types of polymers within each generic class of polymers, as well as derivatives thereof. As noted, such polymers are generally commercially available. Although fluoropolymers can be utilized, sulfonic acid functionalized fluoropolymers are not desired and can be excluded from the present invention. That is, the amount thereof is generally 10% or less, desirably 5% or less, preferably 1% by weight or less, and most preferably no sulfonic acid functionalized fluoropolymers are utilized based upon the total weight of all polymers present. The polymers are desirably thermoplastic so that the various one or more inorganic support compounds can be readily blended or mixed therewith, although the support compounds can be blended with the one or more polymers which are subsequently crosslinked to form a thermoset.

Moreover, various natural compounds can be utilized such as cellulose, biopolymers, and the like.

Preferred polymers include various polyethylenes, various polypropylenes, various polyimides, and derivatives thereof.

Highly preferred polymers are various poly(aromatic ether ketones), such as poly(oxy-1,4,-phenylene-oxy-1,4-phenylene-carbonyl-1,4-phenylene) (PEEK) manufactured by Victrex (UK) and having the following formula:

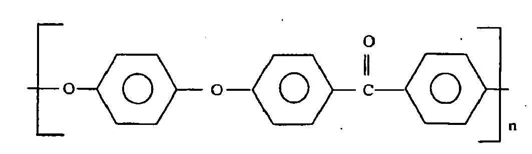

The glass transition temperature of PEEK is typically about 200°C, and it has the required thermal and chemical resistance to lead to a strong composite.

As noted above, the polymers can either be functionalized or non-functionalized with functionalized polymers being preferred. The addition of functional groups to the various polymers of the present invention are well known to the art and to the literature and many such functional polymers are commercially available.

The desired functionalized polymers can contain numerous different functional groups. Generally, such functionalizing agents are the same as set forth hereinabove with regard to the inorganic support compound. That is, examples of suitable functionalizing agents include one or more of a salt, a halogen containing compound, a hydrocarbon, an oxygen containing compound, a sulfur containing compound, a nitrogen containing compound, or a phosphorous containing compound, or combinations thereof, wherein:
the one or more salts are halides, permanganates, nitrates, sulfates, phosphates, salts of various metals, or combinations thereof;
the one or more halogen containing compounds are halides, or halogenized hydrocarbons, each containing from 1 to about 20 carbon atoms, or combinations thereof;
the one or more hydrocarbons are linear, cyclic, aromatic or polycyclic hydrocarbons, each containing from 1 to about 20 carbon atoms, or combinations thereof;
the one or more oxygen containing compounds are alcohols, alkoxides, polyatomic alcohols, aldehydes, ketones, ethers, polyatomic ethers, carboxylic acids, or polyatomic carboxylic acids and their anhydrides, esters, or carboxylates, each containing from 1 to about 20 carbon atoms, or combinations thereof;
the one or more sulfur containing compounds are thiols, sulfones, sulfonic acid, or sulfonates, each containing from 1 to about 20 carbon atoms, or combinations thereof;
the one or more of a nitrogen containing compounds are primary amines, (e.g. ammonium chloride), secondary amines, tertiary amines, quaternary ammonium bases and their salts, polyatomic amines, amides, cyamides, isocyanates, isothiocyanates, imides, or pyridines, each containing from 1 to about 20 carbon atoms, or combinations thereof; and
the functionalizing agent of the inorganic support compound are one or more phosphorous containing compounds are phosphines, phosphates, phosphineoxydes, phosphoric acids, phosphonic acids or, phosphonates, each containing from 1 to about 20 carbon atoms, or combinations thereof.

The amount of the functionalized or non-functionalized polymers utilized to form the ion exchange composites of the present invention is generally from about 10 to about 90 weight percent, desirably from about 50 to about 88 weight percent, and preferably from about 70 to about 85 weight percent based upon the total weight of the one or more functionalized or non-functionalized polymers and the one or more functionalized inorganic support compounds.

Sulfonation is a common way to modify a polymer structure by grafting sulfonic acid groups that give the sulfonated material proton exchange capacity. The capacity of proton mobility depends on the amount and on the dispersion of the acid groups in the material. When utilized, the acid groups are normally present in the polymers in amounts varying between 0 mmol/g or 0.1 mmol/g to about 5.0 mmol/g.

Several studies are currently available on the sulfonation of this kind of structures. One of the most suitable sulfonation methods for use in the present invention is with a sulfonation in concentrated H₂SO₄, as described in EP 8895 and later in Br. Polym. J., vol. 17, 1985, p. 4. This sulfonation reaction is less damageable for the polymer than the chlorosulfonation route because no significant chain scission or degradation occurs. Once the polymer is sulfonated, the corresponding formula for the sulfonated PEEK is typically:

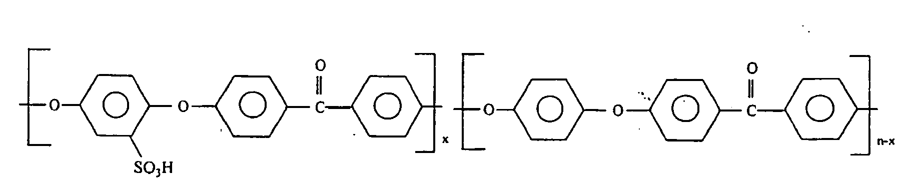

The degree of sulfonation corresponds to x/n, with x corresponding to the number of repeat units carrying one sulfonic acid group. Then, PEEK with 100% sulfonation has one acid group per repeat unit, or one acid group per three aromatic rings. The number of sulfonic acid groups per gram of sulfonated polymer determines the ion exchange capacity (IEC) of the polymer. For example, a 100% sulfonated PEEK has an IEC of 2,9 mmol/g.

The amount of sulfonic acid groups bonded to the aromatic rings depends on several parameters such as temperature, time, concentration of polymer in the acid. Many properties of the sulfonated PEEK (SPEEK) such as its proton capacity, solubility, water retention, and expansion coefficients vary with its sulfonation rate, i.e. with its ion exchange capacity.

For the inorganic phase, the use of silica functionalized with sulfonic acid groups presents not only the advantage of the proton conductivity, but also a better efficiency in water retention than the non functionalized silica. Typically, the water retention of acid silica is twice as high than usual silica. For example, the water retention of acid silica is about 30% instead of 15% with usual silica in an environment under 70% of relative humidity.

The structure of the inorganic support compound such as silica also plays an important role in water retention. While hereinafter the support compound is discussed in terms of silica, it is to be understood that generally the same principles apply to the other support compounds noted herein. For example, a low bulk density structure increases the water retention in comparison to a high bulk density silica mainly because of its higher specific area. Typically, a low bulk density structure can take twice more water than a high bulk density structure. For example, the water retention of silica with a low bulk density structure is about 15% comparatively to about 7% for silica with a high bulk density structure under 70% of relative humidity. Moreover, a large surface area, as encountered in a low bulk density structure, improves the loading of the acid functionality in the inorganic compound. For example, the loading of a functionalized low bulk density silica is typically 1,7 mmol/g, while it is typically twice less with only 0.9 mmol/g for a porous high bulk density silica.

Low bulk density sulfonic acid silica can be typically prepared via a co-condensation process as described, for example, in Chem. Mater. 2000, Vol. 12, p.2448. Sulfonic acid groups can also be grafted on high bulk density silica using, for example, the method described in J. Chromato. 1976, Vol. 117, p.269. Several types of bonding are possible to link the sulfonic acid groups to the silica particles. In the present invention, preferred but not limited bonding deals with a propylphenyl chain. The link may also comprise any kinds of alkyl derivatives or aromatic derivatives and combinations thereof, with or without heteroatoms and/or halogens in the chemical structure.

The composite material is prepared by adding the acid silica particles into the polymer matrix and mixing both homogenously. A preferred method proceeds via a polymer solution in which the silica particles or a silica suspension in the same solvent or in a miscible solvent of the polymer solution are needed. The suspension is then homogenized before being spread in a uniform thin layer and dried. Satisfying mixture may also be obtained without using a solvent such as a melting phase based process. Another method is to precipitate the silica into the polymer solution, follow by an application of the composite, and evaporating the solvent.

The composite material can be used as such or can be easily prepared in a membrane form usable for elect electrochemical devices like proton exchange membranes for fuel cells, humidifying or drying membranes for gas or solvent conditioning, and acid catalytic membrane.

The current densities of the composites of the present invention are generally very high such that they can be utilized in fuel cells. Generally the current density is at least about 1.0 A/cm² at about 0.7 volts or less or at about 0.6 volts or less; at least about 1.5 A/cm² at about 0.6 volts or less or at about 0.5 volts or less or at about 0.4 volts or less; and preferably at least about 2.0 A/cm² at about 0.5 volts or less or at about 0.4 volts or less, or at about 0.3 volts or less.

In lieu of silica or as a partial replacement thereof, the mechanical properties of the composite material depend mainly on the ones of the polymer matrix and on the silica content. Mechanical properties determine the lower limit of a film thickness that can be manipulated without breaking. A polymer that is too rigid does not allow enough deformation of a thin film without breaking, while structures that are too flexible do not hold the composite material in a thin film form. In the same way, too many inorganic particles prevent a good tear resistance and make the film particularly brittle.

The solubility properties of the composite material depend particularly on the ones of the polymer matrix. As previously mentioned, the solubility of the polymer depends on the temperature and on its ion exchange capacity. The maximum temperature at which the material may be used in a particular liquid such as water for the hydrated state is directly related to the solubility properties of the polymer. Sufficient silica in the composite material that may vary between 10 to 30 weight percent enhances proton conductivity to a degree that depends on the density of the corresponding silica used.

In the present invention, many parameters can easily be changed to adjust the properties of the final composite. Typically, the following parameters have to be considered for the formulation of the composite material: solvent solubility, utilization temperature, thickness of the material in final form, and the expected ion exchange value. The corresponding sulfonation rate of the polymer matrix is then determined. The characteristics of the silica are subsequently evaluated considering mainly the porosity needs depending on the desired acid loading and water retention.

The ion exchange composite materials (e.g. proton exchange membrane) of the present invention have numerous uses wherein they yield good results. The composites can be utilized either as particle, in the form of a membrane, either porous or solid, and the like. The composite material has good water retention capabilities due to the acidic functions and the hydrophilicity of the silica particles and thus can be utilized in end uses therefore. The ion exchange composite has good impermeability to gases such as hydrogen, and liquids such as fuels commonly used in fuel cells, e.g. methanol and the like. Another end use is for the desalination of water. The composites have also been found to result in good separation of metals such as sodium, copper, lead, and cadmium. The ion exchange composites also have good physical properties such as yield strength such as at least about 37 Mpa, good thermal degradation resistance, good dehydration dimensional stability as well as hydration dimensional stability, and good glass transition temperatures of at least about 200°C. A highly preferred end use is in the form of a solid membrane for fuel cells inasmuch as the composites have good current density properties as noted hereinabove.

The invention is also illustrated by means of the following non-limiting examples.

### EXAMPLE 1

### Sulfonation of PEEK

SPEEK with 55% of sulfonation is obtained, for example, by stirring 50g of PEEK in 2 to 1 of H₂SO₄ (95-98% in H₂O) for 48 hours at room temperature. The solution is poured in H₂O and the solid phase, corresponding to sulfonated PEEK (SPEEK) is washed vigorously 2 to 3 times in 5:1 pure water. The isolated solid is first dried in an oven at about 70°C for one night and then, after another washing, it is dried at 100°C under vacuum for several days. About 40 g of SPEEK is obtained (yield ^{~} 80%). Elementary analysis gives the sulfur content of the sulfonated polymer and the corresponding ion exchange capacity (IEC) is then calculated. An IEC of 1,6 ± 0,1 mmol/g is obtained, corresponding to a sulfonation rate of about 55%.

### EXAMPLE 2 (not according to the invention)

### Composite Film Preparation

a) 1 g of 55% sulfonated PEEK (SPEEK55) is solubilized in 10 ml of dimethylformamide (DMF) at room temperature and filtered on filter paper. A suspension of 0.2707 g of sulfonic acid grafted silica in 2 ml of DMF is added to the clear polymer solution. After stirring, the homogenous mixture is spread out over a 385 cm² glass substrate before being dried at 70°C for several days. After the complete evaporation of the solvent, the film is easily removed from the glass substrate by immersion in water. Once dried, the thickness of the composite film, made of 80% in weight of a 55% sulfonated PEEK and of 20% in weight of acid silica, is 40±10µm.

b) 0.1755 g of SPEEK55 is solubilized in 1.7 ml of DMF and filtered. 0.0195 g of sulfonic acid grafted silica is added to the polymer solution. After homogenization, the mixture is spread out over a 25 cm² glass substrate. Once dried, the composite film, comprising 90% in weight of a 55% sulfonated PEEK and 10% in weight of acid silica, has a thickness of 50 µm.

### EXAMPLE 3 (not according to the invention)

### Electrode Deposition on Composite Films for Fuel Cell Testing

Commercial Pt/C electrodes (Pt/Vulcan XC-72 from ElectroChem Inc.) are stuck on composite films by spreading a small amount of SPEEK 55 10% DMF solution (w/v) on the side of the two electrodes that sandwich the membrane. Assemblies are dried under vacuum at room temperature for one day, under vacuum at 60°C for one night, and at 80°C for several days.

### EXAMPLE 4 (not according to the invention)

### Performance Comparison

The performance obtained with a membrane according to the present invention is compared to that obtained with a membrane according to JP 2001-155744 (Example 1).

The composite material of the Japanese reference contains an inorganic phase mixed inside a polymer solution at 5% (w/v). The inorganic phase is fumed silica grafted with phenylsilane as a coupling agent and is thereafter reacted with H₂SO₄ cc. The organic phase is the binding agent of the inorganic phase. In the present case, Nafion®, a perfluorinated polymer bearing sulfonic acid groups, is used. For the experimentation, the fuel cell is operated at 80°C under an H₂/air atmosphere at 22 psig. Under voltage from 0.6 V to 0.7 V, the fuel cell generates a current density of 0.5 A/cm² while under 0.5 V, it generates 1 A/cm². It will be noted that the membrane, according to the Japanese reference, contains one weight percent silica, while the membrane according to the present invention contains 20 weight percent silica.

The composite material, according to the present invention, contains an inorganic phase mixed inside a polymer solution at 10% (w/v). The inorganic phase contains silica obtained by co-condensation and functionalized by chlorosulfonation. The organic phase is SPEEK. For the experimentation, the fuel cell is operated at 75°C under an H₂/air atmosphere at 20/30 psig. Under a voltage of 0.7 V, the fuel cell generates a current density of 1 A/cm², under 0.6 V it generates 1.7 A/cm² to 1.8 A/cm², and under 0.5 V it generates 2.2 A/cm² to 2.3 A/cm².

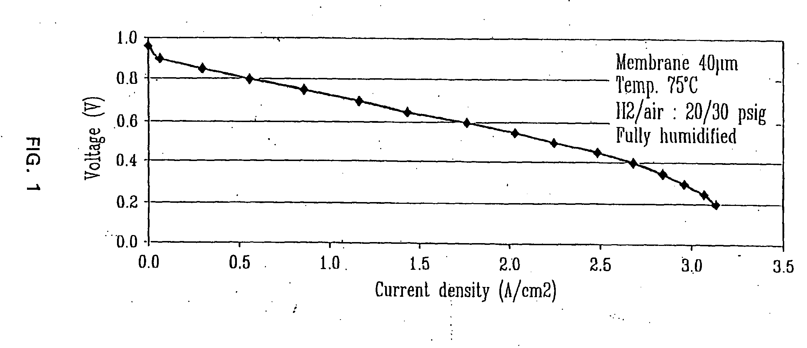

Under similar operating conditions, the present invention generates a much higher current density than that of the Japanese patent, as will be seen from FIG. 1, wherein the material used is made of 20 weight percent silica containing 1.4 mmol of sulfonic acid groups per gram and 80 weight percent of SPEEK55 prepared as in Example 1.

### EXAMPLE 5

### Composite material based on functionalized silica covalently bonded to a polymer matrix

The composite material, according to an embodiment of the present invention, comprises an acid functionalized polymer matrix and a dispersed basic functionalized silica. The functional basic groups of the silica can react with the ion exchange groups of the polymer structure leading to covalent bonding between the silica particles and the polymer matrix. Such cross-linking process enhances the thermal and mechanical resistance of the material, prevents its water solubility and stabilizes the silica particles in the material. The hydrophilicity of silica improves the water management in the material. Due to the possible high loading in ion exchange functionalities for the polymer matrix, the composite material presents an interesting proton conductivity, and is then usable as proton exchange membrane in fuel cell.

### Example 5-1 Cross linked Composite preparation

1 g of 65% sulfonated PEEK is solubilized in 10 ml of dimethylformamide (DMF) at room temperature and filtered with filter paper. A suspension of 0.2707 g of functionalized basic (propylamine) silica in 2 ml of DMF is added to the clear polymer solution.

Some usable functional silicas have:
i) grafted basic reactive groups which are primary or secondary or tertiary amine or derivatives thereof;
ii) a degree of loading in basic reactive groups is from 0.01 to 5.00 mmol/g;
iii) covalent bonds attaching the amine groups to silica particles, that can be linear or ramified alkyl chains, or linear or ramified aromatic chains, or a combination of alkyl and aromatic chains linear or ramified with linear or ramified alkyl or aromatic chains, and with or without heteroatoms in the chains, and with or without halogens in the chains.

### Example 5-2 Cross linked Composite FILM preparation

After stirring, the homogeneous mixture is spread out over a 385 cm² glass substrate before drying at 70°C for several days. After the complete evaporation of the solvent, the film is easily removed from the glass substrate by immersion in water. The cross-linking process is made immersing the film in hot water (70°C) for 4 days. After drying, the thickness of the composite film, made of 80% in weight of a 65% sulfonated PEEK and of 20% in weight of basic silica, is 25 ± 5µm.

### Example 5-3 Cross linked Composite FILM enhancement results:

The film presents good resistance in boiling water in comparison to a film of 65 % sulfonated PEEK or a film made of 80% in weight of a 65 % sulfonated PEEK and 20% in weight of non functionalized silica that both dissolve in a few minutes in boiling water. The crosslinked composite film in this example did not dissolve.

### Example 5-4 Electrodes deposition on composite films for fuel cell testing

Commercial Pt/C electrodes (Pt/Vulcan XC-72 from ElectroChem Inc.) are stuck on composite films by spreading a small amount of liquid Nafion 10% (w/v) on the side of the two electrodes that sandwich the membrane, and dried in an oven at 50°C for 24 hours. Assemblies are hot pressed at 130°C, 150 N/cm² during 5 minutes.

### Example 5-5 Fuel cell performance

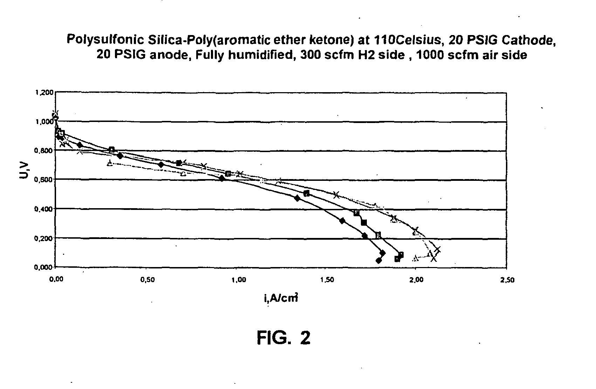

A typical polarization curve is shown on Fig.2. The corresponding material is made of 20% in weight of silica containing 1.5 mmol of propylamine group per gram and 80% in weight of sulfonated PEEK at 65%.

General conditions of fuel cell testing: polysulfonic silica-poly(aromatic ether ketone) cation exchange membrane at 110°C, 20 PSIG Cathode, 20 PSIG anode. Fully humidified, 300 scfm H2 side, 1000 scfm air side.

### EXAMPLE 6

### Composite material based on antioxidant and other free radicals (ex:OH·) entrapping (scavenging) functionalities covalently bonded to silica with a polymer matrix

The composite material, according to the present invention, comprises an acid functionalized polymer matrix and a dispersed antioxidant functionalized silica. The functional basic groups of the silica react with the free radicals generated by chemical or electrochemical reactions on the surface of the composite material leading antioxidant groups bounded (grafted) on the silica particles to entrapped the OH· free radicals and reduce or eliminate chemical degradation rate of polymer due to the free radicals attack on the said polymer.

Such free radicals elimination process enhances the chemical, thermal and mechanical resistance of the material, prevents its degradation and stabilizes enhance lifetime of the polymer in the composite recipes. Moreover, the hydrophilicity of silica improves the water management in the material. Due to the possible high loading in antioxidants and other free radicals entrapping (scavenging) functionalities, the composite material presents an interesting longer chemical resistance than same polymer with no antioxidant and other free radicals (ex:OH·) entrapping (scavenging) functionalities functionalized and covalently bonded to silica with anti proton conductivity, and is then usable as proton exchange membrane in fuel cell, Chlor-alkali membrane process, among others.

### Example 6-1 Free radicals resistance enhancement Composite preparation

a) 1g of 65% sulfonated PEEK is solubilized in 10ml of dimethylformamide (DMF) at room temperature and filtered with filter paper. A suspension of 0.2707g of functionalized basic (propylamine) silica in 2ml of DMF is added to the clear polymer solution.

Some usable functional silicas have:
i) grafted basic reactive groups which are primary or secondary or tertiary amine or derivatives thereof
ii) a degree of loading in basic reactive groups is from 0.01 to 5.00 mmol/g
iii) covalent bonds attaching the amine groups or other free radicals (ex:OH·) entrapping (scavenging) functionalities to silica particles, that can be linear or ramified alkyl chains, or linear or ramified aromatic chains, or a combination of alkyl and aromatic chains linear or ramified with linear or ramified alkyl or aromatic chains, and with or without heteroatoms in the chains, and with or without halogens in the chains

### Example 6-2 Free radicals resistance enhancement Composite FILM preparation

A thin layer of the homogeneous mixture of SPEEK 65% sulfonated is spread out over a 385 cm² glass substrate before drying at 70°C for several days. After the complete evaporation of the solvent, the film is easily removed from the glass substrate by immersion in water.

The homogeneous mixture described in 6-1 is spread out over a previous layer of SPEEK thin film on both sides before drying at 70°C for several days. After drying, the thickness of the composite film, made of 80% by weight of a 65% sulfonated PEEK and of 20% by weight of basic silica, is 40 ±5 µm.

### Example 6-3 Free radicals resistance enhancement Composite FILM preparation results:

The film presents good resistance in boiling water in comparison to a film of 65 % sulfonated PEEK or a film made of 80% by weight of a 65 % sulfonated PEEK and 20% by weight of non functionalized silica that both dissolve in a few minutes in boiling water.

Also the free radicals resistance enhancement Composite FILM demonstrate better mechanical resistance than a film made of 80% by weight of a 65% sulfonated PEEK and 20% by weight of non functionalized silica at same thickness.

Results based on ASTM D 882 standard procedures at room temperature:

| **Thin film** | **YIELD STRENGH** |
|---|---|
| FILM 1 : Free radicals resistance enhancement Composite FILM | 40 MPA |
| FILM 2: Composite FILM made with a non functional silica | 32 MPA |

### Example 6-4 Electrodes deposition on composite films for fuel cell testing

Commercial Pt/C electrodes (Pt/Vulcan XC-72 from ElectroChem Inc.) are stuck on composite films by spreading a small amount of liquid Nafion 10% (w/v) on the side of the two electrodes that sandwich the membrane, dried in an oven at 50°C for 24 hours. The assemblies are hot pressed at 130°C, 150 N/cm² for 5 minutes.

### Example 6-5 Mechanical testing after fuel cell test.

A typical fuel cell test was performed on two films. An extreme Open cell Voltage (0 Ampere/Square centimeter) fuel cell test was performed for 2 weeks at the following conditions. General conditions of fuel cell testing: Polysulfonic silica-poly(aromatic ether ketone) cation exchange membrane at 80°C, 20 PSIG Cathode, 20 PSIG anode, Fully humidified, 300 scfm H2 side , 1000 scfm air side.

It is clear using here that the rate of degradation in fuel cell is significantly reduced by using antioxidant functionalized silica compared to a non-functional silica. It is well known one of the major mechanism of chemical degradation occur at open cell voltage where free radicals are created at high level into fuel cell. The major effect of chemical degradation is the reduction of mechanical resistance. We clearly prove here that we enhance mechanical properties of the film into fuel cell and should provide longer live into fuel cell operation.

Results based on ASTM D 882 standard procedures at room temperature after a 2-week open cell voltage test in fuel cell.

| **Thin film** | **YIELD STRENGH after test** | **% of degradation** |
|---|---|---|
| Free radicals resistance enhancement Composite FILM | 35 MPA | 12,5% |
| Composite FILM made with a non functional silica | 15 MPA | 53,1% |

### EXAMPLE 7 (not according to the invention)

This example deals with sodium ion behavior on polysulfonic silica-poly(aromatic ether ketone) polymer cation exchange membrane. Sodium ion distribution coefficient was determined to be 1.1. Experiments on sodium recovery from diluted feed solution (0.001 M) using initial ratio of feed/stripping (2 M HNO₃) volumes equal to 20:1 and 10:1. The enrichment coefficients were found to be equal 3.01 and 3.12 respectively. The experiment on sodium recovery from 0.0125 M to 2 M HNO₃ (10:1) through polysulfonic silica-poly(aromatic ether ketone) cation exchange membrane gave the enrichment coefficient of 2.11.

Experiments were made concerning Cd, Pb, Cu and Na recovery and pre-concentration from diluted (5. 6 -1 0.10⁻⁴ M) solutions into nitric acid stripping solutions (10:1) depending on the concentration of stripping solution (2 M and 4 M). ). It was shown that metal recovery decreased in a row Na > Pb Cu > Cd. for both concentration. Enrichment coefficients were equal to 3.12, 1.39, 1.41, 1.1.05 (2 M HNO₃) and 2.17, 1.68, 1.26, 1.08 (4 M HNO₃) respectively.

Various high, common, toxic and precious metals enter into waste solutions through washing, rinsing, pickling and other surface treatment procedures adopted in industries such as hydrometallurgy and galvanic technology. Metals in effluents, sludges and other industrial wastes represent not only substantial losses in raw material but are of serious concern as environmental pollutants as well.

There are a lot of methods of metal recovery and pre-concentration based on precipitation, co-precipitation, absorption, ion exchange, liquid extraction and so forth. All these processes as usual are consisted of several steps, including for instance extraction and back extraction stages. Membrane processes such as donnan dialysis, electrodialysis or diffusion dialysis have recently become attractive owing to their technological simplicity (only one stage). More over these processes are very economical, less time-consuming than most separation methods.

Donnan dialysis is a membrane-based equilibrium process based on a chemical potential difference established between two compartments separated by ion exchange membrane polymer. (Though Donnan dialysis is an economical, simple technological and energy saving process it is not widely applied in industry because of its slow kinetics. Besides, an osmosis phenomenon takes place when the concentration difference between two compartments exists. But all this obstacles could be avoided when electrodialysis is used)

Dialysis process can be successfully used for either metal pre-concentration from very diluted wastes or metal recovery from any wastes or metal separation or metal selective isolation from other metals using some selective permeability properties of used membranes.

The aim of the present work is to reveal the dialysis properties of polysulfonic silica-poly(aromatic ether ketone) cation exchange membrane cation exchange membrane.

| Metal | Cd | Cu | Pb |
|---|---|---|---|
| Initial concentration in feed solution, M | 9.31.10⁻⁴ | 8.17.10⁻⁴ | 3.1.10⁻⁴ |
| Ultimate concentration in feed solution, M | 4.5.10⁻⁵ | 1.76.10⁻⁴ | 2.41.10⁻⁵ |
| Ultimate concentration in stripping solution, M | 6.7.10⁻⁴ | 5.26.10⁻⁴ | 2.27.10⁻⁴ |
| Recovery, % | 96.93 | 86.43 | 95.25 |
| Extraction coefficient | 14.8 | 3.0 | 9.4 |

Surface area of polysulfonic silica-poly(aromatic ether ketone) cation exchange membrane ( using Speek-61% of sulfonation in the composite membrane 16cm*24cm) Feed solution: aqueous solution of metal salts with pH = 5, 350 ml Stripping solution - 0.1 M EDTA with pH = 5, 350 ml. Water uptake to the stripping compartment ^{~} 34 % (120 ml) = 0.5 ml/min (rate of pumping)

The "static" examples were carried out using the following procedure: the membrane pieces (about 0.110 g) were pretreated with distilled water for 18 hrs, then dried for 55 min at 70°C, and then equilibrated with 1 M HCl for 24 hrs to convert them into H⁺ form. The membranes were soaked with filter paper and dried on air. Then they were put into the solutions of NaCl; 0.1 M, 0.05 M, 0.025, 0.0125 M and equilibrated for 24 hrs at constant stirring. Then they were blotted with filter paper and plunged into 20 ml of 2M nitric acid for 24 hrs at stirring. The equilibrium uptake of sodium ions was then determined using ICP AES analysis. The experiment with a piece of membrane not converted into H⁺ form and used as it is was made using 0.1 M NaCl solution. It was shown that untreated membrane recovered fewer amounts of sodium ions than treated one. The concentrations of sodium ions after membrane equilibrating with 0.1 M sodium chloride solution were equal to 0.474 and 0.573 M/L respectively.

The specific density of the membrane LT 40 was found to be equal to 0.49 g/cm³. All calculations were performed taking into consideration 10% membrane swelling in water.

Donnan dialyses were carried out for 24 hrs using a laboratory cell with feed compartment varying from 100 to 50 ml and stripping compartment of 5ml. Both solutions were stirred. 2 M and 4 M nitric acid solutions were used as receiving solutions. Solutions of sodium chloride (0.001 M and 0.0126 M) and mixture of sodium, cadmium, lead and copper salts (^{~} 6 -10.10⁻⁴ M) were used as feed solutions. To prepare mixture of salts Hg (NO₃)₂.H₂O, CuSO₄.5H₂O, Cd(NO₃)₂.4H₂O and NaCl were used. Polysulfonic cation exchange membranes polysulfonic silica-poly(aromatic ether ketone) cation exchange membrane (40 microns) and Nafion 112 (50 microns) were used in the experiments. The surface of the membrane was equal to 1.54 cm².

### Results and discussion

When contacted with water solutions (feed solutions with initial sodium concentration Cₒ), membranes should have the ability to remove cations Na⁺ from them due to the strongly ionisable sulfonic acid groups. This process is described by the following reaction: membrane-SO₃⁻ H⁺ + Na⁺ + Cl⁻ ↔ membrane-SO₃⁻Na⁺ + H⁺ + Cl⁻

After the establishment of equilibrium sodium is distributed between two phases with distribution (partition) coefficient: D₁ = Cₘ /C_{f}, where ^{.}Cₘ - sodium concentration (M) in the membrane, C_{f} - sodium concentration (M) in the feed solution.

If the membrane is then placed into another (stripping) solution, usually strong acid media (HA), sodium will redistributed between two phases according the equation membrane-SO₃⁻Na⁺ + H⁺ + A⁻ ↔ membrane-SO₃⁻H⁺ + Na⁺ + A⁻ and with distribution coefficient D₂ = Cₘ/Cₛ (where Cₛ sodium concentration (M) in the stripping solution) which is considerably lower than D₁. Combining then two processes in one cell, where two compartments with feed and stripping solutions are separated by membrane we could carry out the process of sodium transfer from feed solution through membrane to stripping solution.

Sometimes this process can be used for metal pre-concentration from large amount of diluted solutions, metal recovery or metal separation by allowing the preferential transport as well.

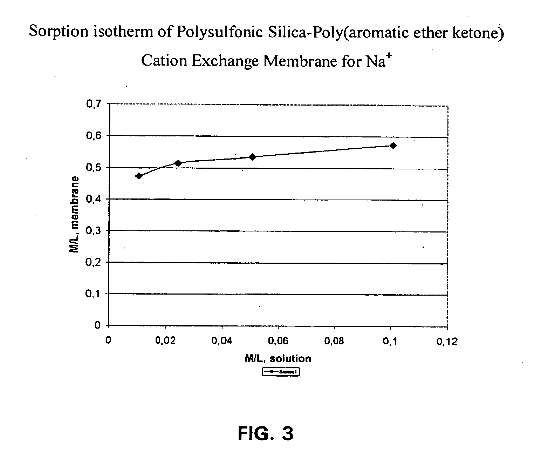

Thus to show whether the membrane is perspective for either recovery or pre-concentration of some metal it is worth determining the distribution coefficient of studied metal between the solution (feed or stripping) and the membrane.
Sorption isotherm of polysulfonic silica-poly(aromatic ether ketone) cation exchange membrane for sodium is presented on FIG.3

In FIG. 3, axis X represents external sodium concentration and axis Y is the salt concentration in the membrane. The distribution coefficient was obtained from the slope of isotherm and it was equal to ^{~} 1.09. For instance, it was found that sodium distribution coefficients for various type of polysulfonic membranes such as SA₃S and SA₃T from Gelman Sciences and Neosepta CL-25T and CM2 from Tokuyoma Soda varied from 0.392 to 0.432. (Thus we can conclude that polysulfonic silica-poly(aromatic ether ketone) cation exchange membrane at a thickness of 40 microns will provide higher sodium transport).

Several dialysis experiments at various initial conditions were made using polysulfonic silica-poly(aromatic ether ketone) cation exchange membrane 40 microns. The values of sodium flux and enrichment factors are presented in Table A. It is seen from the data that sodium flux considerably depends upon its concentration in the feed solutions. In spite of the fact that sodium flux increases with the increase in concentration of the stripping solution the enrichment factor decreases because of stripping solution dilution due to water osmosis into receiving compartment, Table B.

**Table A Sodium transfer through the membranes**

| Membrane | Conditions | 2 M HNO₃/ 0.001 M NaCl, 20:1, against pressure | 2 M HNO₃/ 0.0126 M NaCl 10:1 | 2 M HNO₃/ 10:1, 0.001 M Cd, Pb, Cu, Na | 4 M HNO₃/ 10:1, 0.001 M Cd, Pb, Cu, Na + Stirring |
|---|---|---|---|---|---|
| polysulfonic silica-poly(aromatic ether ketone) cation exchange membrane | flux, mol/cm²sx10¹⁰ | 2.93 | 23.97 | 2.82 | 2.90 |
| | Enrichment^{*} factor | 3.01 | 2.11 | 3.12 | 2.17 |

| | | | | | |
|---|---|---|---|---|---|
| * Enrichment factor is a ratio of metal ultimate concentration in a stripping solution to metal initial concentration in a feed solution. | | | | | |

Water osmosis is a very serious obstacle of Donnan dialysis application; it ultimately decreases the concentration of stripping solution thus decreasing metal recovering and diluting the concentration of stripped elements. It is seen from the data that the concentration of stripping solution affects water cross over. The higher the chemical activity of ions in feed solution the lower water flux through membranes. Nafion membrane allows the highest water cross over. To prevent water transfer some external pressure from the side of stripping compartment or closed volume of stripping solution should be used. We could prevent water osmosis using, for instance, solutions of complexones as stripping solution as well.

**Table B. Water flux through polysulfonic membranes, mol/ cm⁻².s⁻¹ x10⁶**

| Stripping solution + conditions | 2 M HNO₃/ 0.001 M NaCl, 20:1, against pressure | 2 M HNO₃/ 0.0126 M NaCl 10:1 | 2 M HNO₃/ 10:1, 0.001 M Cd, Pb, Cu, Na | 4 M HNO₃/ 10:1, 0.001 M Cd, Pb, Cu, Na + Stirring | 4 M HNO₃/ 10:1, H₂O + stirring |
|---|---|---|---|---|---|
| polysulfonic silica-poly(aromatic ether ketone) cation exchange membrane | 3.34 | 2.92 | 2.92 | 5.39 | |
| Nafion 112 | | | | 7.10 | 10.86 |

Besides sodium the behavior of some heavy metals in dialysis process with polysulfonic silica-poly(aromatic ether ketone) cation exchange membrane 40 microns was of certain interest. In terms of their recovery and concentrating from diluted solutions. A model solution containing Cd, Cu, Pb, and Na in low concentrations varying from 5.6.10⁻⁴ M to 1.10⁻³ M was used.

Data on recovery of some metals from diluted solutions are summarized in Table C and Table D.

Metal flux depends considerably from initial concentration of metal, so we can't rely on these data when comparing the extent of metal recovery using membrane, because the concentration of investigated metals were not equal. So it is better to take into consideration enrichment factors. From the data obtained we can conclude that metal recovery decreased in a row Na >Pb ≥Cu > Cd. for both concentration and both membranes.

**Table C. Metal fluxes through polysulfonic membranes, 10¹⁰Mol.cm⁻².s⁻¹**

| Stripping solution + conditions | 2 M HNO₃/ 10:1, 0.001 M Cd, Pb, Cu, Na | | | 4 M-HNO₃/ 10:1, 0.001 M Cd, Pb, Cu, Na + Stirring | | |
|---|---|---|---|---|---|---|
| **Metal** | **Cd⁺²** | **Cu⁺²** | **Pb⁺²** | **Cd⁺²** | **Cu⁺²** | **Pb⁺²** |
| polysulfonic silica-poly(aromatic ether ketone) cation exchange membrane | 0.92 | 0.95 | 0.7 | 1.39 | 1.33 | 1.19 |

**Table D. Enrichment factors of metals in the course of Donnan dialysis**

| Stripping solution + conditions | 2 M HNO₃/ 10:1, 0.001 M Cd, Pb, Cu, Na | | | 4 M HNO₃/ 10:1, 0.001 M Cd, Pb, Cu, Na + Stirring | | |
|---|---|---|---|---|---|---|
| **Metal** | **Cd⁺²** | **Cu⁺²** | **Pb⁺²** | **Cd⁺²** | **Cu⁺²** | **Pb⁺²** |
| polysulfonic silica-poly(aromatic ether ketone) cation exchange membrane | 1.05 | 1.41 | 1.39 | 1.08 | 1.26 | 1.68 |

In classical exchange membranes, cations of different charges can be separated because of the preferential transfer of low charged cations. An extraction factor K is defined for every cation between two compartments: K = Cₛ/C_{f}, where C is the concentration of the studied element after equilibrium establishment. If K > 1 most of the cation will be recovered in stripping compartment, if K < 1 most of the cation will stay in feed compartment. The higher extraction factor the higher metal recovery from feed solutions. Extraction factors are presented in Table E.

Data obtained show that under chosen conditions the membranes could be used for metal recovery, as their extraction coefficients are higher than 1.

**Table E. Isolation of metals using Donnan dialysis with polysulfonic membranes**

| Stripping solution + conditions | 2 M HNO₃/ 10:1, 0.001 M Cd, Pb, Cu, Na | | | | 4 M HNO₃/ 10:1, 0.001 M Cd, Pb, Cu, Na + Stirring | | | |
|---|---|---|---|---|---|---|---|---|
| **Metal** | **Cd⁺²** | **Cu⁺²** | **Pb⁺²** | **Na⁺** | **Cd⁺²** | **Cu⁺²** | **Pb⁺²** | **Na⁺** |
| polysulfonic silica-poly(aromatic ether ketone) cation exchange membrane | 1.16 | 1.75 | 1.71 | 5.39 | 1.19 | 1.64 | 3.04 | 4.59 |
| SPEEK | | | | | 3.92 | 5.38 | 7.01 | 8.01 |

As apparent from the above tables, polysulfonic silica-poly(aromatic ether ketone) cation exchange membrane can be used for metal recovery from diluted waste solutions.

### EXAMPLE 8 (not according to the invention)

Example 8 relates to various properties of a membrane containing 65% sulfonated PEEK (85 wt%) and sulfonated silica (15 wt%) made in a manner similar to Examples 2 and 3.

| **PROPERTY/ATTRIBUTE** | **Silica-poly(aromatic ether ketone)exchange membrane** | **Test method** |
|---|---|---|
| **GAS SEPARATOR** | | |
| Visual defects | No | Visual |
| Hydration dimensional stability (RT and 100°C in water) | 3% | ASTM D 756 |
| Dehydration dimensional stability (RT and 100°C in water) | 3% | ASTM D 756 |
| % COVs | <0,2%* | |
| Thickness variation (µm) | <2,0 µm | |
| Thermal degradation resistance (wt loss) <1% | <1% | |
| **MECHANICAL PROPERTIES** | | |
| Yield strength at RT (Mpa) | 37 Mpa | ASTM D 882 |
| Modulus at RT (Mpa) | 1660 Mpa | ASTM D 882 |
| Glass transition temperature (tg) | 200°C | |
| **PROTON CONDUCTOR** | | |
| Available EW (g/mol) (H+ form) | 1,30 meq/g | |
| Total EW (g/mol) (H+ form) | 1,35 meq/g | |
| Water content (RT) | 12% | ASTM D 570 |
| Water uptake (at RT) | 25% | ASTM D 570 |
| Water uptake ( at 100°C) | 40% | ASTM D 570 |
| **OTHERS CHARACTERISTICS** | | |
| Fluorinated or not | No | |
| Roll product yes or no | Yes | |
| Polarization curve 75°C Yes SIM | Yes | |

| | | |
|---|---|---|
| *No COV used in the process | | |

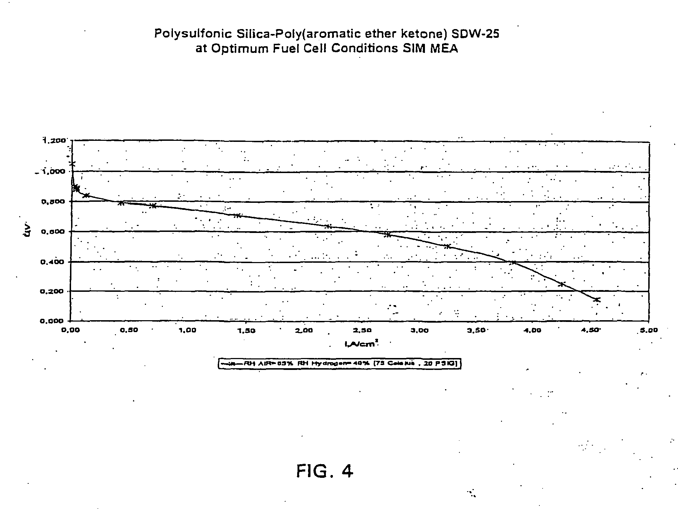

The current density of the above compound is set forth in FIG. 4 which shows that high current densities were obtained.

While in accordance with the patent statutes the best mode and preferred embodiment have been set forth, the scope of the invention is not intended to be limited thereto, but only by the scope of the attached claims.

## Claims

1. An ion exchange composite material, comprising:
a mixture of a) a sulfonic acid group functionalized polymer or copolymer, or a derivative thereof, and b) a functionalized inorganic support compound,
wherein said inorganic support compound comprises metal oxides of groups 4, 13, or 14 of the periodic table, and wherein said functionalizing agent is selected from the group consisting of
- one or more salts selected from halides, permanganates, nitrates, sulfates, phosphates, salts of various metals, or combinations thereof;
- one or more halogen containing compounds selected from halides, or halogenized hydrocarbons, each containing from 1 to 20 carbon atoms, or combinations thereof;
- one or more hydrocarbons selected from linear, cyclic, aromatic or polycyclic hydrocarbons, each containing from 1 to 20 carbon atoms, or combinations thereof;
- one or more oxygen containing compounds selected from alcohols, alkoxides, polyatomic alcohols, aldehydes, ketones, ethers, polyatomic ethers, esters, or carboxylates, each containing from 1 to 20 carbon atoms, or combinations thereof;
- one or more sulfur containing compounds selected from thiols, sulfones, or sulfonates, each containing from 1 to 20 carbon atoms, or combinations thereof;
- one or more of a nitrogen containing compound selected from primary amines, secondary amines, tertiary amines, quaternary ammonium bases and their salts, polyatomic amines, amides, cyamides, isocyanates, isothiocyanates, imides, or pyridines, each containing from 1 to 20 carbon atoms, or combinations thereof; and
- one or more phosphorous containing compounds selected from phosphines, phosphates, phosphineoxides, or phosphonates, each containing from 1 to 20 carbon atoms, or combinations thereof;
wherein said sulfonic acid group functionalized polymer or copolymer is an acrylonitrile-butadiene-styrene copolymer, an acetal polymer, an acrylic polymer, a copolymer of an acrylic and polyvinyl chloride, polybutyrate, polyethylene-vinyl acetate, a fiber reinforced polymer, a polyamide, a phenolic, polyamide-imide, poly(benzoyl phenylene), polycarbonate, polyester, polyetherimide, polyethersulfone, polyethylene, polyimide, polyphenylene oxide, polyphenylene sulfide, polypropylene, polystyrene, polysulfone, polyurethane, polyvinyl chloride, polybenzimidazole, polytetrafluoroethylene, polyphthalamide, a liquid crystal polymer, cellulose, or any combination thereof.

2. An ion exchange composite material according to claim 1, wherein the amount of said functionalized inorganic support compound is from 2 to 90% by weight and the amount of said sulfonic acid group functionalized polymer or copolymer is from 10 to 98% by weight based upon the total weight of said functionalized inorganic compound and said sulfonic acid group functionalized polymer or copolymer.

3. An ion exchange composite material according to claim 1, wherein said inorganic support compound comprises zirconium oxide, titanium oxide, aluminum oxide, silica, and combinations thereof.

4. An ion exchange composite material according to claim 3, wherein the amount of said functionalized inorganic support compound is from 10 to 50 weight percent and the amount of said sulfonic acid group functionalized polymer or copolymer is from 50 to 90 weight percent.

5. An ion exchange composite material according to claim 1, wherein the amount of said functionalized inorganic support compound is from 15 to 30 weight percent and wherein the amount of said sulfonic acid group functionalized polymer is from 70 to 85 weight percent, wherein said inorganic support compound comprises a porous silica, a solid non-porous silica, amorphous silica, fumed silica, precipitated silica, spherical silica, mesoporous silica, irregular silica, structured silica, molecular sieve silica, silesquioxane derivatives thereof, and combinations thereof, and
wherein said functionalizing agent of said inorganic support compound is the sulfonate, the thiol, or combinations thereof.

6. An ion exchange composite material according to claim 1, wherein said sulfonic acid group functionalized polymer is poly(oxy-1,4-phenylene-oxy-1,4-phenylenecarbonyl-1,4-phenylene) or derivatives thereof, or poly(benzoyl phenylene) or derivatives thereof, or combinations thereof.

7. A fuel cell comprising the ion exchange composite material of any one of claims 1 to 6.

8. Use of the ion exchange composite material as defined in any one of claims 1 to 6, for humidifying or drying, or for conditioning gas or a solvent, or as an acid catalytic membrane, or for the desalination of water, or for the separation of metals.

## Patentansprüche

1. lonenaustauschverbundmaterial, bestehend aus:
einer Mischung aus a) einem sulfonsäuregruppenfunktionalisierten Polymer oder
Copolymer oder einem Derivat davon und b) einer funktionalisierten anorganischen Stützverbindung,
wobei besagte anorganische Stützverbindung aus Metalloxiden der Gruppen 4, 13 oder 14 des Periodensystems besteht und wobei besagtes funktionalisierte Mittel ausgewählt ist aus der Gruppe bestehend aus
- einem oder mehreren Salzen ausgewählt aus Halogeniden, Permanganaten, Nitraten, Sulfaten, Phosphaten, Salzen von verschiedenen Metallen oder Kombinationen davon;
- einer oder mehreren halogenhaltigen Verbindungen ausgewählt aus Halogeniden oder Halogenkohlenwasserstoffen, jede enthaltend von 1 bis 20 Kohlenstoffatome oder Kombinationen davon;
- einem oder mehreren Kohlenwasserstoffen ausgewählt aus linearen, zyklischen, aromatischen oder polyzyklischen Kohlenwasserstoffen, jeder enthaltend von 1 bis 20 Kohlenstoffatome oder Kombinationen davon;
- einer oder mehreren sauerstoffhaltigen Verbindungen ausgewählt aus Alkoholen, Alkoxiden, mehratomigen Alkoholen, Aldehyden, Ketonen, Ethern, mehratomigen Ethern, Estern oder Carboxylaten, jede enthaltend von 1 bis 20 Kohlenstoffatome oder Kombinationen davon;
- einer oder mehreren schwefelhaltigen Verbindungen ausgewählt aus Thiolen, Sulfonen oder Sulfonaten, jede enthaltend von 1 bis 20 Kohlenstoffatome oder Kombinationen davon;
- einer oder mehrerer einer stickstoffhaltigen Verbindung ausgewählt aus Primäraminen, Sekundäraminen, Tertiäraminen, quartären Ammoniumbasen und deren Salze, mehratomigen Aminen, Amiden, Cyamiden, Isocyanaten, Isothiocyanaten, Imiden oder Pyridinen, jede enthaltend von 1 bis 20 Kohlenstoffatomen oder Kombinationen davon; und
- einer oder mehreren phosphorhaltigen Verbindungen ausgewählt aus Phosphinen, Phosphaten, Phosphinoxiden oder Phosphonaten, jedes enthaltend von 1 bis 20 Kohlenstoffatome oder Kombinationen davon;
wobei besagtes sulfonsäuregruppenfunktionalisiertes Polymer oder Copolymer ein Acrylnitril-Butadien-Styrol-Copolymer, ein Acetalpolymer, ein Acrylpolymer, ein Copolymer eines Acryl- und Polyvinylchlorids, Polybutyrat, Polyethylen-Vinylacetat, ein faserverstärktes Polymer, ein Polyamid, ein Phenol, Polyamidimid, Poly(benzoylphenylen), Polycarbonat, Polyester, Polyetherimid, Polyethersulfon, Polyethylen, Polyimid, Polyphenylenoxid, Polyphenylensulfid, Polypropylen, Polystyren, Polysulfon, Polyurethan, Polyvinylchlorid, Polybenzimidazol, Polytetrafluorethylen, Polyphthalamid, ein Flüssigkristallpolymer, Zellulose oder eine Kombination davon ist.

2. lonenaustauschverbundmaterial gemäß Anspruch 1, wobei der Gehalt der besagten funktionalisierten anorganischen Stützverbindung von 2 bis 90 Gewichtsprozent beträgt und der Gehalt des besagten sulfonsäuregruppenfunktionalisierten Polymers oder Copolymers von 10 bis 98 Gewichtsprozent beträgt, basierend auf dem Gesamtgewicht der besagten funktionalisierten anorganischen Stützverbindung und des besagten sulfonsäuregruppenfunktionalisierten Polymers oder Copolymers.

3. lonenaustauschverbundmaterial gemäß Anspruch 1, wobei besagte anorganische Stützverbindung aus Zirkoniumoxid, Titanoxid, Aluminiumoxid, Kieselsäure und Kombinationen davon besteht.

4. lonenaustauschverbundmaterial gemäß Anspruch 3, wobei der Gehalt der besagten funktionalisierten anorganischen Stützverbindung von 10 bis 50 Gewichtsprozent beträgt und der Gehalt des besagten sulfonsäuregruppenfunktionalisierten Polymers oder Copolymers von 50 bis 90 Gewichtsprozent beträgt.

5. lonenaustauschverbundmaterial gemäß Anspruch 1, wobei der Gehalt der besagten funktionalisierten anorganischen Stützverbindung von 15 bis 30 Gewichtsprozent beträgt und wobei der Gehalt des besagten sulfonsäuregruppenfunktionalisierten Polymers oder Copolymers von 70 bis 85 Gewichtsprozent beträgt, wobei besagte anorganische Stützverbindung aus einer porösen Kieselsäure, einer festen nicht poröseren Kieselsäure, amorpher Kieselsäure, pyrogener Kieselsäure, Fällungskieselsäure, kugelförmige Kieselsäure, mesoporöser Kieselsäure, irregulärer Kieselsäure, strukturierter Kieselsäure, Molekularsieb-Kieselsäure, Silesquioxan-Derivaten davon und Kombinationen davon besteht und
wobei besagtes funktionalisiertes Mittel der besagten anorganischen Stützverbindung das Sulfonat, das Thiol oder Kombinationen davon ist.

6. lonenaustauschverbundmaterial gemäß Anspruch 1, wobei besagtes sulfonsäuregruppenfunktionalisiertes Polymer oder Copolymer Poly(oxi-1,4-phenylen-oxi-1,4- phenylen-carbonyl-1,4-phenylen) ist oder Derivate davon oder Poly(benzolphenylen) oder Derivate davon oder Kombinationen davon.

7. Brennstoffzelle bestehend aus dem lonenaustauschverbundmaterial nach einem der Ansprüche 1 bis 6.

8. Benutzung des Ionenaustauschverbundmaterials wie in einem der Ansprüche 1 bis 6 definiert zur Befeuchtung oder zum Trocknen oder zur Aufbereitung von Gas oder einem Lösungsmittel oder als eine säurekatalysierte Membran oder zur Destillation von Wasser oder zur Trennung von Metallen.

## Revendications

1. Matériau composite échangeur d'ion, comprenant : un mélange a) d'un polymère ou co-polymère fonctionnalisé d'un groupe d'acide sulfonique, ou un dérivé de celui-ci, et b) d'un composé de support inorganique fonctionnalisé,
dans lequel ledit composé de support inorganique comprend des oxydes de métaux de groupes 4, 13 ou 14 du tableau périodique, et dans lequel ledit agent de fonctionnalisation est choisi à partir du groupe composé de
- un ou plusieurs sels choisis parmi les halogénures, permanganates, nitrates, sulfates, phosphates, des sels de divers métaux, ou des combinaisons de ceux-ci ;
- un ou plusieurs composés contenant des halogènes choisis à partir des halogénures, hydrocarbures halogénisés, chacun comprenant entre 1 à 20 atomes de carbone, ou des combinaisons de ceux-ci ;
- un ou plusieurs hydrocarbures choisis parmi les hydrocarbures linéaires, aromatiques, cycliques et polycycliques, chacun comprenant entre 1 à 20 atomes de carbone, ou des combinaisons de ceux-ci ;
- un ou plusieurs composés contenant de l'oxygène choisis parmi les alcools, alcoxydes, alcools polyatomiques, aldéhydes, cétones, éthers, éthers polyatomiques, esters ou carboxylates, chacun comprenant entre 1 à 20 atomes de carbone, ou des combinaisons de ceux-ci ;
- un ou plusieurs composés contenant du souffre choisis parmi les thiols, sulfones ou sulfonates, chacun comprenant entre 1 à 20 atomes de carbone, ou des combinaisons de ceux-ci ;
- un ou plusieurs composés contenant de l'azote choisi parmi les amines primaires, amines secondaires, amines tertiaires, bases d'ammonium quaternaire et leurs sels, amines polyatomiques, amides, cyamides, isocyanates, isothiocyanates, imides ou pyridine, chacun comprenant entre 1 à 20 atomes de carbone, ou des combinaisons de ceux-ci ; et
- un ou plusieurs composés contenant du phosphore choisis parmi les phosphines, phosphates, phosphineoxydes ou phosphonates, chacun comprenant entre 1 à 20 atomes de carbone, ou des combinaisons de ceux-ci ;
dans lequel le polymère ou co-polymère fonctionnalisé d'un groupe d'acide sulfonique est un copolymère acrylonitrile-butadiène-styrène, polymère acétal, polymère acrylique, copolymère d'un acrylique et le chlorure de polyvinyle, polybutyrate, acétate de polyethylène-vinyle, polymère renforcé de fibre, polyamide, phénolique, polyamide-imide, poly(benzoyl phénylène), polycarbonate, polyester, polyétherimide, polyéthersulfone, polyéthylène, polyimide, oxyde de polyphénylène, sulfure de polyphénylène, polypropylène, polystyrène, polysulfone, polyuréthane, chlorure de polyvinyle, polybenzimidazole, polytetrafluoroéthylène, polyphthalamide, polymère cristal liquide, cellulose ou toute combinaison de ceux-ci.

2. Matériau composite échangeur d'ion selon la revendication 1, dans lequel la quantité dudit composé de support inorganique fonctionnalisé est entre 2 et 90% par poids et la quantité dudit polymère ou co-polymère fonctionnalisé d'un groupe d'acide sulfonique est entre 10 et 98% par poids basé sur le poids total dudit composé inorganique fonctionnalisé et dudit polymère ou co-polymère fonctionnalisé d'un groupe d'acide sulfonique.

3. Matériau composite échangeur d'ion selon la revendication 1, dans lequel ledit composé de support inorganique comprend de l'oxyde de zirconium, de l'oxyde de titane, de l'oxyde d'aluminium, de la silice et des combinaisons de ces composés.

4. Matériau composite échangeur d'ion selon la revendication 3, dans lequel dans lequel la quantité dudit composé de support inorganique fonctionnalisé est en 10 et 50 pourcentage poids et la quantité dudit polymère ou co-polymère fonctionnalisé d'un groupe d'acide sulfonique et de 50 à 90 pourcent par poids.

5. Matériau composite échangeur d'ion selon la revendication 1, dans lequel la quantité dudit composé de support inorganique fonctionnalisé est de 15 à 30 poids pourcent et dans lequel la quantité dudit polymère fonctionnalisé d'un groupe d'acide sulfonique est entre 70 et 85 poids pourcent, dans lequel ledit composé de support inorganique comprend une silice poreuse, une silice solide non poreuse, la silice amorphe, la silice fumée, la silice précipitée, la silice sphérique, la silice mésoporeuse, la silice irrégulière, la silice structurée, la silice à tamis moléculaire, des dérivés silesquioxane de ceux-ci, et des combinaisons de ceux-ci, et
dans lequel ledit agent de fonctionnalisation dudit composé de support inorganique est le sulfonate, le thiol ou des combinaisons de ceux-ci.

6. Matériau composite échangeur d'ion selon la revendication 1, dans lequel ledit polymère fonctionnalisé d'un groupe d'acide sulfonique est le poly(oxy-1,4-phénylène-oxy-1,4-phénylènecarbonyl-1,4-phénylène) ou des dérivés de ceux-ci, ou le poly(benzoyl phénylène) ou des dérivés de ceux-ci, ou des combinaisons de ceux-ci.

7. Pile à combustible contenant le matériaux composite échangeur d'ion de l'une quelconque des revendications 1 à 6.

8. Utilisation du matériau composite échangeur d'ion telle que définie dans l'une quelconque des revendications 1 à 6, pour l'humidification ou le séchage, ou pour le conditionnement d'un gaz ou d'un solvant, ou en tant que membrane catalytique acide, ou pour la désalinisation de l'eau, ou pour la séparation des métaux.
